# EUROPÄISCHE PATENTSCHRIFT

(11) **EP 3 621 463 B1**
(45) Veröffentlichungstag und Bekanntmachung des Hinweises auf die Patenterteilung: **20.05.2020**
(21) Anmeldenummer: 18833888.3
(22) Anmeldetag: 21.12.2018
(51) Int. Cl.: A23P 30/20

(54) **KÜHLDÜSE FÜR EXTRUDER**
COOLING NOZZLE FOR EXTRUDERS
BUSE DE REFROIDISSEMENT POUR EXTRUDEUSE

(30) Priorität: 27.12.2017 DE 102017223829
(43) Veröffentlichungstag der Anmeldung: 18.03.2020
(73) Patentinhaber: Deutsches Institut für Lebensmitteltechnik e.V., 49610 Quakenbrück (DE)
(72) Erfinder: ISAAK, Johann, 49610 Quakenbrück (DE); REIMER, Dimitri, 49610 Quakenbrück (DE)
(74) Vertreter: Taruttis, Stefan Georg
(86) Internationale Anmeldenummer: PCT/EP2018/086757
(87) Internationale Veröffentlichungsnummer: WO 2019/129744

(56) Entgegenhaltungen:
- EP-A1- 0 512 146
- EP-A1- 3 222 148
- CN-U- 202 062 627
- US-A1- 2015 044 334

## Beschreibung

Die vorliegende Erfindung betrifft eine Kühldüse für einen Extruder sowie ein Verfahren zur Herstellung von extrudierten Massen, die insbesondere Lebensmittelmassen sind, mit dem Schritt der Kühlung der Masse nach deren Austritt aus einem Extruder. Die Kühldüse zeichnet sich durch einen Aufbau aus, der eine schnelle Kühlung extrudierter Massen erlaubt. Bevorzugt ist die Kühldüse mit ihrem Produktkanal unmittelbar am Auslass eines Extruders angeschlossen. Bevorzugt betrifft die Erfindung eine Kombination der Kühldüse mit einer Reinigungseinrichtung, die an die Kühldüse angepasst ist, sowie ein Verfahren zur Reinigung der Kühldüse.

Für das Verfahren sind Lebensmittelmassen bevorzugt duroplastisch härtende Massen, die sich durch Erwärmung verfestigen, bevorzugt durch Erwärmung beim Durchtritt durch den Extruder, z.B. auf zumindest eine Temperatur, bei der in der Lebensmittelmasse enthaltenes Protein denaturiert und/oder Stärke geliert.

Es ist bekannt, extrudierte Massen nach Austritt aus einer Extruderdüse durch Kontakt mit einem Kühlband oder durch Überströmen mit einem Kühlmittel zu kühlen.

Die EP 0512 146 A1 beschreibt eine Kühldüse für die Lebensmittelherstellung, bei der ein Produktkanal zwischen einem Innenrohr und einem davon beabstandeten Mantelrohr gebildet wird, die jeweils einen Kühlmittelkanal aufweisen.

Die CN 202 062 627 U zeigt eine Reinigungsvorrichtung für eine Kühldüse mit einer Anschlußplatte zur Befestigung an der Kühldüse und mit einer Spindel, die ortsfest und drehbar an einer mit der Anschlußplatte verbundenen Lagerplatte gelagert ist.

Die EP 3 222 148 A1 beschreibt zur Herstellung von Lebensmitteln eine Förderschnecke, die von einem Rohr umfasst ist, das einen Doppelmantel zur Temperierung aufweist.

Die US 2015/0044334 A1 beschreibt für die Herstellung von Proteinmassen mit ausgerichteten Fasern einen Extruder mit einer Düse, die einen geschlossenen ringförmigen Querschnitt hat. Dieser Querschnitt wird von einem Kühlmantel und einem darin koaxial liegenden innengekühlten Zylinder begrenzt, der am Einlass mittels eines Trägers am Kühlmantel befestigt sein kann.

Der Erfindung stellt sich die Aufgabe, eine alternative Düse für einen Extruder und ein Verfahren bereitzustellen, die eine extrudierte Masse effektiv kühlen können. Bevorzugt soll die Düse eine Gestalt aufweisen, die eine leichte Reinigung insbesondere des Produktkanals von einer zähen oder darin verfestigten Lebensmittelmasse erlaubt. Bevorzugt soll zur Reinigung des Produktkanals der Düse eine Reinigungsvorrichtung bereitgestellt werden.

Die Erfindung löst die Aufgabe mit den Merkmalen der Ansprüche und insbesondere mit einer Kühldüse, die einen Produktkanal mit ringförmigem Querschnitt aufweist, der bis auf zumindest eine Ausnehmung, bevorzugt bis auf genau eine Ausnehmung, umfänglich geschlossen ist. Die Ausnehmung führt dazu, dass aus dem Produktkanal austretende Masse sich auf einer Unterlage flach ausbreitet, wenn die Masse nach der Kühlung während des Durchtritts durch die Kühldüse hinreichend verfestigt ist, dass sie auf einer ebenen Unterlage nicht zerfließt. Daher formt die Kühldüse eine Masse, die nach dem Austritt aus der Kühldüse auf eine Unterlage positioniert wird, zu einer flachen einschichtigen Schicht, die eine Breite entsprechend des Umfangs des Produktkanals abzüglich der Ausnehmung aufweist. Dabei ist es nicht erforderlich, die Masse nach Austreten aus dem Produktkanal längs ihrer Bewegungsrichtung zu teilen, um die Masse in einer kontinuierlichen Schicht auf der Unterlage abzulegen. Der Produktkanal ist an seinen gegenüberliegenden Enden, die zwischen den Enden bzw. Stirnflächen des Innenrohrs und des inneren Mantelrohrs liegen, offen. Entsprechend ist der Querschnitt des Produktkanals offen. Generell bevorzugt ist der Querschnitt des Produktkanals bis auf den Träger und optionale Stege offen und ringförmig, weiter bevorzugt ist der Querschnitt des Produktkanals über seine Länge konstant.

Die Ausnehmung in dem ringförmigen Querschnitt des Produktkanals wird von zumindest einem Träger, bevorzugt von genau 1 Träger, gebildet, der sich entlang der Längsachse des Innenrohrs über die vollständige Länge des Produktkanals erstreckt und den Querschnitt des Produktkanals teilt.

Der Produktkanal ist an seinen beiden gegenüberliegenden Enden offen, von denen eines eine Eintrittsöffnung bildet und das andere eine Austrittsöffnung. Der ringförmige Querschnitt erstreckt sich entlang der Längsachse des Produktkanals und ist bevorzugt über seine Länge einschließlich der beiden gegenüberliegenden endständigen Öffnungen konstant.
Der Produktkanal wird durch ein inneres Mantelrohr und ein darin mittels des Trägers fixiertes Innenrohr gebildet. Durch den Träger ist das Innenrohr in einem Abstand vom inneren Mantelrohr angeordnet. Das innere Mantelrohr wird von einem äußeren Mantelrohr umfasst, so dass diese einen Doppelmantel um das Innenrohr bilden. Bevorzugt ist das äußere Mantelrohr konzentrisch in einem radialen Abstand um das innere Mantelrohr angeordnet.

Der Träger erstreckt sich bevorzugt parallel zur Längsachse des Innenrohrs und weist zwischen dem inneren Mantelrohr und dem Innenrohr zwei einander gegenüberliegende Wandflächen auf, die unterbrechungsfrei sind und bevorzugt glatt. Die Wandflächen des Trägers kontaktieren das innere Mantelrohr und das äußere Mantelrohr und formen die Ausnehmung in der im Produktkanal strömenden Masse. Dabei grenzen die Wandflächen durchgehend am Innenrohr und am inneren Mantelrohr an, so dass das Innenrohr, die Wandflächen und das innere Mantelrohr einen Produktkanal mit umfänglich geschlossenem Querschnitt bilden. Der Träger ist fest mit dem Innenrohr verbunden, z.B. durch Schweißen oder Schrauben.

Der Träger kann mit dem äußeren Mantelrohr verbunden sein, vorzugsweise ist der Träger lösbar mit dem inneren Mantelrohr verbunden. Weiter bevorzugt ist der Träger mit dem Innenrohr verbunden, z.B. durch Verschraubung oder Schweißung, und der Träger ist lösbar, z.B. mittels Verschraubung, mit dem inneren Mantelrohr und/oder dem äußeren Mantelrohr verbunden. Generell ist der Produktkanal gegen den äußeren Kühlmittelkanal fluiddicht, z.B. dadurch, dass der Träger am inneren Mantelrohr anliegt und Durchbrüche durch das innere Mantelrohr abgedichtet sind und/oder vom Träger dicht überdeckt sind. Der Träger kann z.B. durch Schrauben mit dem inneren Mantelrohr verbunden sein, die durch Bohrungen im inneren Mantelrohr geführt sind und in Gewindebohrungen im Träger eingreifen, wobei die Schrauben bevorzugt über das innere Mantelrohr in den äußeren Kühlkanal maximal um den Schraubenkopf ragen, noch bevorzugter bündig mit dem inneren Mantelrohr oder darin versenkt sind. Dabei weist das äußere Mantelrohr bevorzugt passend zu den Bohrungen im inneren Mantelrohr und den Gewindebohrungen im Träger ausgerichtete Montagebohrungen auf, die durch Verschlüsse, z.B. Schraubdeckel, verschließbar sind. In dieser Ausführungsform ist bevorzugt, dass zwischen dem inneren und äußeren Mantelrohr ringförmige Dichtungen angeordnet sind, die die Montagebohrungen des äußeren Mantelrohrs umfassen und durch die der äußere Kühlmittelkanal gegen die Montagebohrungen abgedichtet wird.

Die Wandflächen des Trägers können senkrecht zwischen dem inneren Mantelrohr und dem Innenrohr verlaufen, z.B. entlang der Radiale, die von der Mittellängsachse des Innenrohrs und/oder des inneren Mantelrohrs ausgehen. Alternativ können die Wandflächen des Trägers eine Krümmung aufweisen, z.B. mit einem Radius gleich dem halben Abstand zwischen innerem Mantelrohr und Innenrohr. Die Wandflächen des Trägers können eine Krümmung aufweisen, die aus Sicht des Produktkanals konvex oder vorzugsweise konkav ist.

Der Außenquerschnitt des Innenrohrs und der Innenquerschnitt des inneren Mantelrohrs sind bevorzugt kreisförmig, insbesondere konzentrisch zu einer gemeinsamen Längsachse. Weiter bevorzugt weist das innere Mantelrohr einen kreisförmigen Außenquerschnitt auf und das äußere Mantelrohr weist einen kreisförmigen Innenquerschnitt auf.

Der Doppelmantel aus dem inneren Mantelrohr und äußeren Mantelrohr bildet einen äußeren Kühlmittelkanal, der an seinen beiden Enden, die sich entlang der Längsachse gegenüberliegen, verschlossen ist, z.B. durch Deckel, die den offenen Querschnitt zwischen dem inneren und dem äußeren Mantelrohr überdecken. Der äußere Kühlmittelkanal hat bevorzugt einen ringförmigen Querschnitt. Optional ist in dem äußeren Kühlmittelkanal ein Strömungsleitelement angeordnet, das eingerichtet ist, längs des äußeren Kühlmittelkanals strömendes Kühlmittel gleichmäßig über den Umfang des äußeren Kühlmittelkanals zu verteilen. Das Strömungsleitelement kann z.B. eine entlang des äußeren Kühlmittelkanals laufende Spirale sein, die z.B. konzentrisch zur Längsachse des äußeren Kühlmittelkanals angeordnet ist. Bevorzugt erstreckt sich das Strömungsleitelement über den gesamten radialen Querschnitt des äußeren Kühlmittelkanals, bzw. liegt an dem inneren Mantelrohr und dem äußeren Mantelrohr an. Der äußere Kühlmittelkanal weist einen ersten Einlass und davon beabstandet einen ersten Auslass für Kühlmittel auf, bevorzugt sind der Einlass und der Auslass entlang der Längsachse gegenüberliegenden Enden des äußeren Mantelrohrs angeordnet. Der erste Einlass und der erste Auslass sind z.B. durch das äußere Mantelrohr angeordnet oder durch den Deckel angeordnet, der endständig den offenen Querschnitt zwischen dem inneren und dem äußeren Mantelrohr überdeckt.

Das Innenvolumen des Innenrohrs bildet einen inneren Kühlmittelkanal, der durch einen zweiten Einlass und einen davon beabstandeten zweiten Auslass für Kühlmittel zugänglich ist. Der Innenquerschnitt des Innenrohrs ist an seinen beiden gegenüberliegenden Enden verschlossen, z.B. durch Deckel. Der zweite Einlass und der zweite Auslass können durch die Deckel geführt sein, die den inneren Kühlmittelkanal endständig verschließen.

Bevorzugt sind der zweite Einlass und der zweite Auslass durch den Träger und die Wand des Innenrohrs geführt, z.B. in Form einer Bohrung durch den Träger und die Wand des Innenrohrs. Bevorzugt weisen der zweite Einlass und/oder der zweite Auslass jeweils Anschlussleitungen auf, die dicht durch Bohrungen im äußeren Mantelrohr geführt sind und dicht in Bohrungen eingreifen, die durch den Träger und die Wand des Innenrohrs gehen, wobei solche Bohrungen an entlang der Längsachse gegenüberliegenden Enden des Innenrohrs angeordnet sind. Die Bohrungen sind bevorzugt an an gegenüberliegenden Enden des Trägers angebracht und bilden einen zweiten Einlass und einen zweiten Auslass für den inneren Kühlmittelkanal, wobei die Bohrungen durch das innere Mantelrohr und das Innenrohr geführt sind. An den Bohrungen sind Anschlussleitungen angeschlossen, die flüssigkeitsdicht durch Bohrungen im äußeren Mantelrohr geführt sind, so dass Kühlmittel durch die Anschlussleitungen und die Bohrungen unabhängig vom äußeren Kühlmittelkanal in den inneren Kühlmittelkanal und aus diesem geleitet werden kann.

Die Deckel, die den äußeren Kühlmittelkanal und den inneren Kühlmittelkanal an ihren endständigen Querschnittsöffnungen verschließen, können einstückig ausgebildet sein, z.B. senkrecht zur Längsachse der Kühldüse miteinander verbunden sein. Die Deckel können alternativ jeweils separat ausgebildet sein, so dass die endständigen offenen Querschnitte des äußeren Kühlmittelkanals bzw. des inneren Kühlmittelkanals von jeweils einem Deckel verschlossen sind. Bevorzugt sind die Deckel fest mit dem Innenrohr und/oder dem inneren und/oder dem äußeren Mantelrohr verbunden.

Optional kann die Kühldüse eine Kombination mit einem weiteren Innenrohr bilden, das gegen das eine Innenrohr austauschbar ist, wobei das weitere Innenrohr einen anderen Außendurchmesser aufweist. In Kombination der Kühldüse mit zumindest einem weiteren Innenrohr ist bevorzugt der Träger mit dem Innenrohr verbunden und lösbar mit dem inneren und/oder äußeren Mantelrohr verbindbar, z.B. mittels Schraubverbindungen, so dass beim Lösen der Verbindung des Trägers mit dem inneren und/oder äußeren Mantelrohr das Innenrohr mit dem damit verbundenen Träger aus dem inneren Mantelrohr entnommen bzw. in das innere Mantelrohr eingeführt werden kann. In dieser Ausführungsform der Kühldüse mit zumindest zwei Innenrohren, von denen eines in dem inneren Mantelrohr angeordnet und mittels des Träger mit dem inneren und/oder äußeren Mantelrohr verbunden ist, erstreckt sich der Träger jedes Innenrohrs bevorzugt bis in denselben Radius von der Längsmittelachse des Innenrohrs, so dass jedes Innenrohr durch den Träger konzentrisch zum inneren Mantelrohr gehalten wird. In dieser bevorzugten Ausführungsform erlaubt die Kühldüse die Herstellung von Lebensmitteln in verschiedener Dicke durch Austausch eines Innenrohrs durch ein weiteres, das einen anderen Außendurchmesser aufweist.

Weiter optional kann ein Innenrohr zumindest einen Steg aufweisen, der sich parallel zur Längsachse des Innenrohrs, z.B. parallel zum Träger, entlang des Innenrohrs, bevorzugt über die gesamte Länge des Innenrohrs, erstreckt und die Außenfläche des Innenrohrs überragt. Bevorzugt weist das Innenrohr zumindest zwei Stege auf, die jeweils im gleichen Abstand zueinander und zum Träger um den Umfang des Innenrohrs angeordnet sind. Z.B. können zwei Stege und der Träger jeweils um 120° um die Längsmittelachse des Innenrohrs versetzt und parallel zur Längsachse um das Innenrohr angeordnet sein, bzw. drei Stege und der Träger um jeweils 90° versetzt. Bevorzugt überragen die Stege das Innenrohr bis in denselben Radius, bis in den der Träger das Innenrohr überragt.

Solche Stege unterteilen zusätzlich zu dem Träger den Ringspalt, der zwischen dem inneren Mantelrohr und dem Innenrohr aufgespannt wird und den Produktkanal bildet, so dass die Kühldüse eingerichtet ist, im Herstellungsverfahren die Masse längs ihrer Bewegung zu teilen. Des Weiteren bewirken solche Stege eine stärkere Ausbildung von Strukturen, z.B. von Faserstrukturen, in dem Lebensmittel längs der Bewegungsrichtung durch die Kühldüse.

Die optionalen Stege können Seitenflächen aufweisen, die senkrecht zwischen dem inneren Mantelrohr und dem Innenrohr verlaufen, z.B. entlang der Radiale, die von der Mittellängsachse des Innenrohrs und/oder des inneren Mantelrohrs ausgehen. Alternativ können die Seitenflächen der optionalen Stege eine Krümmung aufweisen, z.B. mit einem Radius gleich dem halben Abstand zwischen innerem Mantelrohr und Innenrohr. Die Seitenflächen können eine Krümmung aufweisen, die aus Sicht des Produktkanals konvex oder vorzugsweise konkav ist. Die Stege sind nicht direkt mit dem inneren Mantelrohr verbunden. Die Stege sind am Innenrohr festgelegt, z.B. mit dem Innenrohr verschweißt oder verschraubt. Bevorzugt enden die Stege in einer Stirnfläche, die in geringem Abstand vom inneren Mantelrohr, z.B. 0,2 mm bis 2 oder bis 1 mm Abstand, oder angrenzend an das innere Mantelrohr angeordnet ist bzw. liegen daran an. Generell sind Stege nicht mit dem inneren Mantelrohr verbunden, so dass das Innenrohr nur mittels des Trägers mit dem inneren Mantelrohr fest verbunden ist.

Generell bevorzugt ist die Kühldüse in axiale Abschnitte unterteilt, deren Enden lösbar miteinander verbunden sind. Eine Kühldüse, die lösbar miteinander verbundene axiale Abschnitte aufweist, hat den Vorteil, dass sie zur Reinigung in diese Abschnitte zerlegt werden kann und dadurch die axialen Abschnitte des Produktkanals von ihren Enden her zugänglich werden. Zur lösbaren Verbindung miteinander weisen die axialen Abschnitte jeweils endständig bevorzugt jeweils einen umlaufenden, radial über das äußere Mantelrohr vorstehenden Rand bzw. Flansch auf, der mittels einer Flansche umfassenden Klammer mit dem radial vorstehenden Rand bzw. Flansch eines angrenzenden Abschnitts lösbar verbunden werden kann. Eine solche Ausführungsform ist geeignet, um die Länge der Kühldüse zu verändern, z.B. zur Anpassung der Kühldüse bei einem Produktwechsel oder um die Struktur eines Produkts durch Veränderung der Länge der Kühldüse zu ändern. Entsprechend kann das Verfahren zur Herstellung von Lebensmitteln den Schritt aufweisen, die Kühldüse um zumindest einen axialen Abschnitt zu verlängern oder zu verkürzen, insbesondere, um die Struktur des Produkts zu verändern und/oder bei Extrudieren einer anderen Masse.

Bevorzugt besteht das Innenrohr, das innere Mantelrohr und/oder zumindest die Wandflächen des Trägers, die den Produktkanal zwischen dem Innenrohr und dem inneren Mantelrohr begrenzen, und/oder der gesamte Träger, unabhängig voneinander aus Edelstahl, lebensmittelgeeignetem Kunststoff oder aus mit Kunststoff, z.B. reibungsverminderndem Kunststoff, insbesondere PTFE (Teflon) beschichteten Metall, oder mit Keramik beschichtetem Metall. Optional bestehen das Innenrohr, das innere Mantelrohr und/oder zumindest die Wandflächen des Trägers, bevorzugt der gesamte Träger, aus Edelstahl, optional mit Kunststoff oder Keramik beschichtet.

Die Kühldüse ist mit ihrem Produktkanal bevorzugt unmittelbar am Auslass eines Extruders angeschlossen, wobei weiter bevorzugt der Austrittsquerschnitt des Extruders ringförmig ist, insbesondere denselben ringförmigen Querschnitt wie der Produktkanal der Kühldüse aufweist. Der Austritt des Extruders kann durch ein Verbindungsstück mit der Eintrittsöffnung des Produktkanals verbunden sein.

Optional bildet das Verbindungsstück, das den Austritt des Extruders mit der Eintrittsöffnung des Produktkanals verbindet, zumindest in einem Abschnitt, der an die Eintrittsöffnung des Produktkanals anschließt oder über seine vollständige Länge einen Produktführungskanal, der einen ringförmigen Querschnitt aufweist. Der ringförmige Produktführungskanal kann von einer Innenwand und einer davon beabstandeten Außenwand gebildet werden, in konstantem Abstand oder in einem mit der Strömungsrichtung größer oder kleiner werdendem Abstand. Die Innenwand und/oder die Außenwand kann kegelförmig sein.

Bevorzugt weist das Verbindungsstück ein Kernstück in einem Mantelabschnitt auf, die zwischen sich einen Produktkanal bilden, der sich vom Querschnitt eines Extruderaustritts bis zu dem Querschnitt des Produktkanals verändert, z.B. vergrößert. Dabei weist das Kernstück in der bevorzugten Ausführungsform einen Ansatz auf, der das Kernstück mit dem Mantelabschnitt verbindet und bevorzugt einen Querschnitt gleich dem Querschnitt des Trägers hat, so dass der Ansatz einen Anteil am Querschnitt des Produktführungskanals einnimmt, der gleich dem Anteil ist, den der Träger im Produktkanal der Kühldüse einnimmt. Dabei weist das Kernstück bevorzugt den Ansatz und daran einen Mantelabschnitt einstückig auf. Optional ist das Kernstück mit dem einstückigen Ansatz und dem Mantelabschnitt in axiale Abschnitte unterteilt, von denen jeder einstückig einen axialen Abschnitt des Ansatzes aufweist. Solche einstückigen axialen Abschnitte können z.B. durch eine Klemmverbindung, die Endabschnitte der axialen Abschnitte umgreift, lösbar miteinander verbunden sein. Die einstückige Ausbildung eines dem Träger entsprechenden Ansatzes am Kernstück eines Verbindungsstücks, bevorzugt auch einstückig mit einem Mantelabschnitt, hat den Vorteil, dass auf das Kernstück und/oder den Ansatz wirkende Kräfte direkt in den Mantelabschnitt geleitet werden und vom Mantelabschnitt aufgenommen werden. Der Mantelabschnitt des Verbindungsstücks kann an einem Ende mit einem Extruder verbunden werden und an seinem gegenüberliegenden Ende mit der Kühldüse.

Das Verbindungsstück kann, insbesondere in den vorgenannten Ausführungsformen, starr sein, z.B. aus Metall. Alternativ kann das Verbindungsstück elastisch sein, z.B. ein lebensmittelgeeigneter Schlauch.

Optional können die Innen- und/oder die Außenwand des Produktführungskanals des Verbindungsstücks thermisch isoliert sein oder beheizt sein, z.B. auf eine Temperatur gleich der Austrittstemperatur der Masse aus dem Extruder oder auf eine Temperatur, die höher als die Austrittstemperatur der Masse aus dem Extruder ist, z.B. auf eine Temperatur von 80 bis 160 °C, bevorzugt 110 bis 130 °C. Die Beheizung der Innen- und/oder die Außenwand des Produktführungskanals kann der Oberfläche der Masse vor deren Eintritt in den Produktkanal der Kühldüse eine höhere Festigkeit, geringere Hafteigenschaften an einer Oberfläche des Produktkanals und/oder eine andere Struktur verleihen als sie die darunterliegende Masse aufweist.

Im Anschluß an eine gegenüber dem Extruder angeordnete Austrittsöffnung der Kühldüse ist bevorzugt ein Förderband als Unterlage für die austretende Masse angeordnet. Optional kann am Austritt des Produktkanals der Kühldüse eine Formungsdüse angebracht sein, bevorzugt mündet die Kühldüse mit dem Querschnitt des Produktkanals unmittelbar oberhalb eines Förderbands. Bevorzugt ist die Kühldüse so angeordnet, dass der Träger oben ist, z.B. bei Anordnung der Kühldüse mit ihrer Längsachse etwa horizontal bis in einen Winkel von 60° oder bis 45° zur Horizontalen, mit dem Austritt des Produktkanals unterhalb seines Eintritts. Bevorzugt ist die Kühldüse so ausgerichtet, dass der Träger oberhalb der Längsachse des Innenrohrs und/oder des inneren Mantelrohrs angeordnet ist, weiter bevorzugt ist die Kühldüse so ausgerichtet, dass der Träger symmetrisch mittig und oberhalb dieser Längsachse angeordnet ist.

Die Kühldüse hat den Vorteil, dass im Verfahren zur Herstellung und Formung einer Masse mittels der Kühldüse ein Förderband, das unterhalb des Düsenaustritts angeordnet ist, ein Förderband sein kann, das nicht temperiert, gekühlt oder beheizt ist, da die ausgetretene Masse gleichmäßig über ihr Volumen gekühlt ist.

Die Kühldüse erlaubt die Herstellung einer festen Masse aus einer extrudierten Masse durch schnelle und gleichmäßige Kühlung und Formung in eine gleichmäßige einlagige Schicht. Die gekühlte Masse weist bevorzugt einen Proteingehalt von zumindest 30 bis 90 Gew.-% an der Trockenmasse, bevorzugt 50 bis 80 Gew.-% an der Trockenmasse, faserige Strukturen oder Schichtstrukturen auf, die sich längs zur Strömungsrichtung erstrecken. Das Endprodukt kann einen Proteingehalt von z.B. 10 bis 50 Gew.-% an der Gesamtmasse aufweisen.

Im Verfahren wird die Masse z.B. mit einer Strömungsgeschwindigkeit von 0,01 bis 550 cm/s, bevorzugt 0,1 bis 10 cm/s oder 1 bis 5 cm/s durch den Produktkanal bewegt. Die Masse kann mit einem Druck von z.B. bis zu 100 bar in die Kühldüse eintreten. Die Austrittstemperatur der Masse aus dem Extruder ist bevorzugt gleich der Eintrittstemperatur in die Kühldüse, z.B. von 80 bis 160 °C, bevorzugt 110 bis 130 °C. Die Austrittstemperatur der Masse aus der Kühldüse ist z.B. 30 bis 120 °C, bevorzugt 60 bis 95°C.

Die Eintrittstemperatur des Kühlmittels in den äußeren und/oder in den inneren Kühlmittelkanal beträgt z.B. -10 °C bis 50 °C, bevorzugt 10 bis 30 °C.

Bevorzugt weist die Kühldüse eine erste Kühleinrichtung auf, die eingerichtet ist, Kühlmittel durch den äußeren Kühlmittelkanal zu fördern und eine zweite Kühleinrichtung, die eingerichtet ist, Kühlmittel durch den inneren Kühlmittelkanal zu fördern. Die erste Kühleinrichtung kann am ersten Einlass und ersten Auslass des äußeren Kühlmittelkanals angeschlossen sein, die zweite Kühleinrichtung kann am zweiten Einlass und zweiten Auslass des inneren Kühlmittelkanals angeschlossen sein. Optional können die erste Kühleinrichtung und die zweite Kühleinrichtung durch eine gemeinsame Kühleinrichtung gebildet sein. Die erste Kühleinrichtung und die zweite Kühleinrichtung sind bevorzugt unabhängig voneinander oder gleich eingerichtet, einen Kühlmittelstrom zu erzeugen, der für eine Kühlung der Masse über die Länge des Produktkanals auf eine Temperatur von 30 bis 120°C ausreicht, der für eine Kühlung der Masse mit einer Kühlrate von 5 bis 130 °C/min ausreicht. Optional können die erste Kühleinrichtung und die zweite Kühleinrichtung unabhängig voneinander oder gleich eingerichtet sein, einen Kühlmittelstrom zu erzeugen.

Dieser Temperaturgradient über die Länge des inneren Mantelrohrs und/oder über die Länge des Innenrohrs kann als Erwärmung des Kühlmittels aufgrund des Durchtritts durch den äußeren Kühlmittelkanal bzw. durch den inneren Kühlmittelkanal bestimmt werden. In einer weiter bevorzugten Ausführungsform wird der Kühlmittelstrom im Gegenstrom zur Strömungsrichtung der Masse geführt. Ein bevorzugtes Kühlmittel ist Wasser oder ein Wasser-Glykol-Gemisch.

Bevorzugt wird der jeweils durch den äußeren Kühlmittelkanal bzw. durch den inneren Kühlmittelkanal tretende Kühlmittelstrom auf die gleiche Eintrittstemperatur eingestellt. Bevorzugt liegt die Kühldüse in Kombination mit einer Reinigungsvorrichtung vor, die mit einem Ende der Kühldüse verbindbar ist. Die Reinigungsvorrichtung weist ein Schiebelement auf, das einen Querschnitt hat, der etwa gleich dem oder kleiner als der Querschnitt des Produktkanals ist, und das mittels eines Spindelvortriebs parallel zur Längsachse der Kühldüse in den Produktkanal verschieblich ist. Dabei weist das Schiebelement parallel zu seiner Längsachse eine Längsausnehmung auf, die zumindest dem Querschnitt des Trägers der Kühldüse entspricht, so dass das Schiebelement längs der Längsachse in den Produktkanal bewegt werden kann, während die Längsausnehmung entlang des Trägers bewegt wird. Beim Verschieben des Schiebelements in den Produktkanal kann eine darin festsitzende Masse auf einfache Weise aus dem gegenüberliegenden offenen Ende des Produktkanals gedrückt werden. Das Schiebelement ist fest mit einer Spindelmutter verbunden, die mit einer Spindel in Eingriff steht, die ortsfest und drehbar in einem Lager an einer Lagerplatte gelagert ist. Die Lagerplatte ist an einem Ende der Reinigungsvorrichtung festgelegt und fest mittels einer Halterung mit einer Anschlussplatte verbunden, die an dem längs der Spindelachse gegenüberliegenden Ende der Reinigungsvorrichtung angeordnet ist. Bevorzugt ist das Ende der Spindel, das gegenüber ihrem Lager in der Lagerplatte ist, drehbar an der Anschlussplatte gelagert. Die Halterung, die die Anschlussplatte mit der Lagerplatte verbindet, kann z.B. zumindest zwei, bevorzugt 3 Stangen oder ein Rohr aufweisen. Wenn die Halterung aus einem Rohr besteht, weist dieses bevorzugt längsverlaufende Ausnehmungen aus, durch die das Schiebelement zugänglich ist, insbesondere für dessen Reinigung.Die Halterung umfasst die Spindel und bevorzugt das Schiebelement. Die Anschlussplatte ist lösbar mit einem Ende der Kühldüse verbindbar, z.B. mittels eines Flanschs, der über die Anschlussplatte ragt und einer Klemme, die den Flansch der Anschlussplatte und einen endständigen Flansch der Kühldüse umfasst. Die Anschlussplatte kann eine Zentriereinrichtung aufweisen, die mit einer Zentriereinrichtung der Kühldüse zusammenwirkt, um das Schiebelement auf den Produktkanal auszurichten. Die Spindel ist mittels eines Spindelantriebs, der z.B. ein Motor, eine Kurbel oder ein Handrad sein kann, ortsfest in der Reinigungsvorrichtung drehbar angetrieben und bewegt die Spindelmutter und das damit verbundene Schiebelement parallel zur Längsachse der Spindel. Nach dem Einführen des Schiebelements in den Produktkanal wirkt der Produktkanal als Linearführung für das Schiebelement, so dass sich dieses nicht mit der Spindel drehen kann. Bevorzugt weist die Reinigungsvorrichtung eine Längsführung auf, die in eine Längsausnehmung des Schiebelements verschieblich eingreift, so dass das Schiebelement und/oder die Spindelmutter in der Reinigungsvorrichtung drehfest und längsverschieblich entlang der Spindelachse geführt ist. Eine Längsführung kann als Schiene ausgebildet sein, die sich abschnittsweise oder vollständig entlang der Spindelachse erstreckt und in dem radialen Bereich angeordnet ist, in dem das Schiebelement eine Ausnehmung aufweist, z.B. entsprechend der Anordnung des Trägers im Produktkanal. Bevorzugt weist das Schiebelement einen über seine Länge konstanten Querschnitt auf.

Das Schiebelement kann z.B. aus Kunststoff oder Metall bestehen.

Die Erfindung wird nun genauer mit Bezug auf die Figuren beschrieben, die in
- Figur 1 eine bevorzugte Ausführungsform der Kühldüse im Schnitt entlang der Längsachse,
- Figur 2 die Kühldüse von Figur 1 im Querschnitt,
- Figur 3 einen Schnitt der Kühldüse mit angeschlossenem Zwischenstück entlang der Längsachse,
- Figur 4 eine erfindungsgemäße Reinigungsvorrichtung für die Kühldüse im Schnitt längs zur Längsachse und im Querschnitt dazu und
- Figur 5 A), B) und C) eine Aufsicht entlang der Längsachse auf eine Ausführungsform der Kühldüse zeigen.

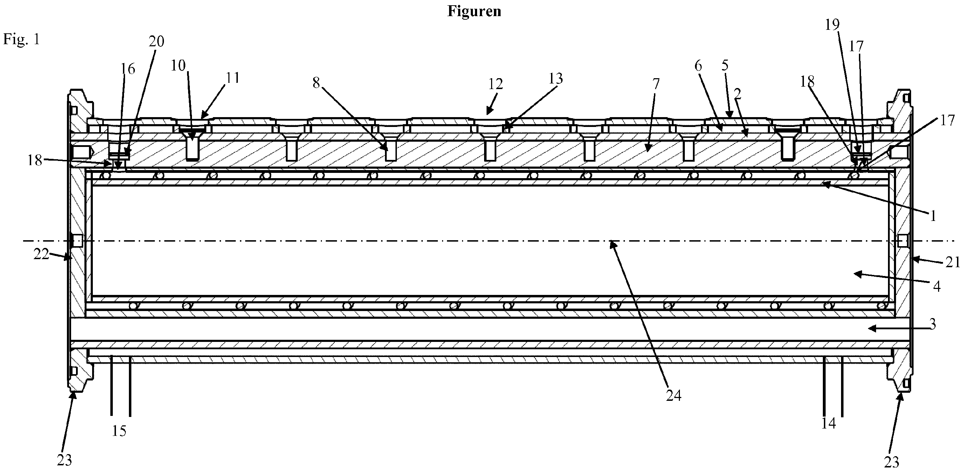

Die Figur 1 zeigt eine Kühldüse mit einem Innenrohr 1, das in einem radialen Abstand von dem inneren Mantelrohr 2 umfasst wird, die zwischen sich den Produktkanal 3 bilden, der an den gegenüberliegenden Enden bzw. Stirnflächen offen ist. Das Innenrohr 1 bildet den inneren Kühlmittelkanal 4. Das innere Mantelrohr 2 ist in einem Abstand vom äußeren Mantelrohr 5 umfasst, die zwischen sich den äußeren Kühlmittelkanal 6 bilden. Das Innenrohr 1 ist mittels des einen Trägers 7, der sich über die vollständige Länge des Innenrohrs 1 parallel zu dessen Längsachse 24 erstreckt, mit dem inneren Mantelrohr 3 verbunden. In Figur 1 ist der Träger 7 im Schnitt gezeigt. Der Träger 7 weist erfindungsgemäß Wandflächen 9 auf, die direkt an das innere Mantelrohr 3 und das Innenrohr 1 angrenzen und kontinuierlich bzw. unterbrechungsfrei sind. Die Wandflächen 9 haben, wie erfindungsgemäß bevorzugt, über die Länge des Innenrohrs 1 und des inneren Mantelrohrs 2 eine gleichbleibende Form und einen gleichbleibenden Abstand voneinander bzw. bilden ein konstantes Profil, so dass der Träger 7 über die Länge des Innenrohrs 1 und des inneren Mantelrohrs 2 einen konstanten Querschnitt hat. Der Träger 7 ist durch Schrauben 10 mit dem inneren Mantelrohr 2 lösbar verbunden. Dabei greifen die Schrauben 10 in Gewindebohrungen 8 im Träger 7 ein. Die Köpfe der Schrauben 10 sind, wie bevorzugt, in Bohrungen im inneren Mantelrohr 2 versenkt, so dass sie nicht in den äußeren Kühlmittelkanal 6 ragen. Das äußere Mantelrohr 5 weist zu den Bohrungen im inneren Mantelrohr 2 ausgerichtete Montagebohrungen 11 auf, durch die die Schrauben 10 zugänglich sind. Die Montagebohrungen 11 sind durch Schraubdeckel 12 (nicht gezeigt) als Verschlüsse verschließbar. Zwischen dem inneren Mantelrohr 2 und dem äußeren Mantelrohr 5 sind ringförmige optionale Dichtungen 13 angeordnet, die den Bereich zwischen einer Montagebohrung 11 und der Schraube 10 gegen den äußeren Kühlmittelkanal 6 abdichten. Das Innenrohr 1 ist z.B. durch eine Schweißung mit dem Träger 7 verbunden. Im äußeren Kühlmittelkanal 6 sind Strömungsleitelemente (nicht dargestellt) angeordnet. Der äußere Kühlmittelkanal 6 weist an einem Ende des äußeren Mantelrohrs 5 einen ersten Einlass 14 für Kühlmittel auf und am entlang der Längsachse 24 gegenüberliegenden anderen Ende eine ersten Auslass 15 für Kühlmittel auf.

Der innere Kühlmittelkanal 4 weist einen zweiten Einlass 16 auf und am entlang der Längsachse 24 gegenüberliegenden anderen Ende eine zweiten Auslass 17 für Kühlmittel auf. Wie hier gezeigt ist, können der zweite Einlass 16 und der zweite Auslass 17 jeweils durch eine Bohrung 18 ausgebildet sein, die sich durch den Träger 7 und die an den Träger 7 angrenzende Wand des Innenrohrs 1 erstreckt, wobei an die Bohrung 18 jeweils eine Anschlussleitung 19 (nicht gezeigt) dicht angeschlossen ist, die sich dicht durch das äußere Mantelrohr 5 erstreckt. Die Anschlussleitungen 19 können z.B. in einem Gewinde 20 in einer der Bohrungen 18 festgelegt sein.

Die endständigen Querschnitte des inneren Kühlmittelkanals 4 und des äußeren Kühlmittelkanals 6 sind durch Deckel 21, 22 verschlossen. In Alternative zur gezeigten Ausführungsform können in gegenüberliegenden Deckeln 21 jeweils ein erster Einlass 14 bzw. ein erster Auslass 15 für Kühlmittel des äußeren Kühlmittelkanals 6 angeordnet sein. In Alternative zur gezeigten Ausführungsform und weniger bevorzugt können der zweite Einlass 16 bzw. der zweite Auslass 17 für Kühlmittel des inneren Kühlmittelkanals 4 gemeinsam in einem Deckel 22 oder jeweils einer in einem der gegenüberliegenden Deckel 22 angeordnet sein.

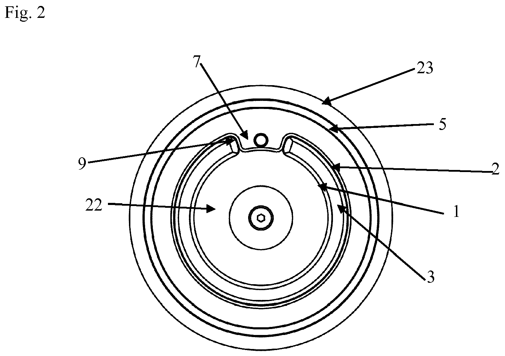

Die Figur 2 zeigt einen Querschnitt der Kühldüse von Figur 1. Die Wandflächen 9 des Trägers 7 sind in der gezeigten Ausführungsform eben und können sich entlang zweier Radiale erstrecken, die von der Längsachse 24 ausgehen.

Zum Anschluss der Kühldüse kann an zumindest einem Ende, z.B. am äußeren Mantelrohr 5, ein Flansch 23 angebracht sein.

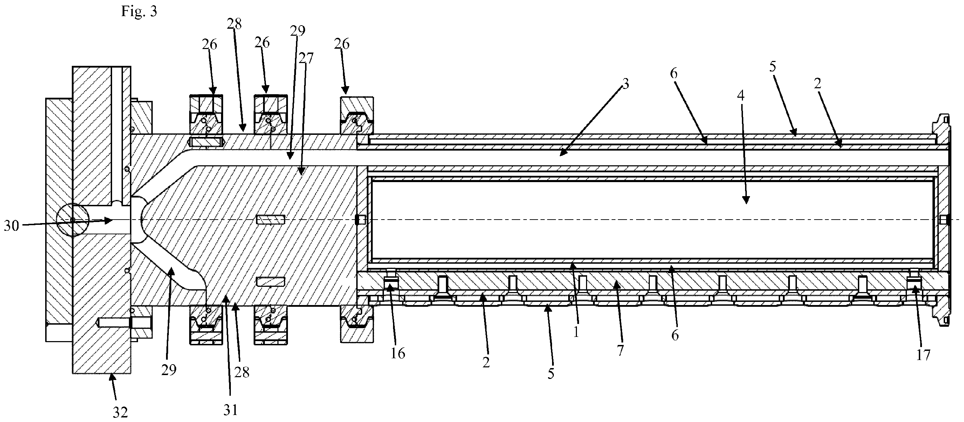

Die Figur 3 zeigt eine Kühldüse, die mit einem Verbindungsstück verbunden ist, indem der eine endständige Flansch 23 der Kühldüse mit einem Flansch 25 des Zwischenstücks durch eine Klemme 26 verbunden ist. Das Verbindungsstück weist ein Kernstück 27 in einem Mantelabschnitt 28 auf, die in einem radialen Abschnitt zwischen sich einen Produktkanal 29 bilden, der sich vom Querschnitt des Extruderaustritts, der an die Öffnung 30 als Produkteinlass angeschlossen werden kann, bis zu dem Querschnitt des Produktkanals 3 vergrößert. Das Kernstück 27 weist einen Ansatz 31 auf, der einen Querschnitt entsprechend des Trägers 7 einnimmt und entsprechend den Produktkanal 29 wie der Träger 7 ausfüllt. Wie bevorzugt ist das Kernstück 27 einstückig mit dem Ansatz 31 und daran dem Mantelabschnitt 28 ausgebildet. Das Kernstück 27 ist mit dem einstückigen Ansatz 31 und dem Mantelabschnitt 28 in axiale Abschnitte unterteilt, von denen jeder einstückig einen axialen Abschnitt des Kernstücks 27, des Mantelabschnitts 28 und zwischen diesen einen axialen Abschnitt des Ansatzes 31 aufweist. Diese einstückigen axialen Abschnitte durch durch die Klemmen 27, die jeweils Flanschen 25 an den Enden der axialen Abschnitte umgreifen, lösbar miteinander verbunden. Der Mantelabschnitt 28 des Verbindungsstücks kann an dem Ende, das gegenüber der Kühldüse liegt, mittels einer Montageplatte 32 mit einem Extruder verbunden werden.

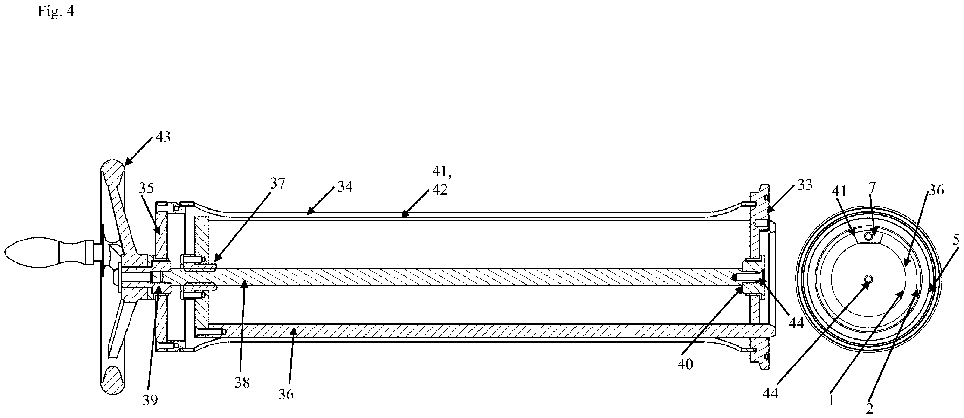

Die Figur 4 zeigt eine Reinigungsvorrichtung, die mit ihrer Anschlussplatte 33, z.B. mittels einer Klemme, am endständigen Flansch einer Kühldüse angebracht werden kann. Die Anschlussplatte 33 ist durch die Halterung 34, hier als drei um den Umfang verteilte Stangen gezeigt, mit der Lagerplatte 35 verbunden. Die Anschlussplatte 33 bildet mit der Lagerplatte 35 und der Halterung 35 ein Gehäuse für das Schiebelement 36, das mit einer Spindelmutter 37 verbunden ist, die mit der Spindel 38 in Eingriff steht. Die Spindel 38 ist drehbar und ortsfest in einem Spindellager 39 gelagert, das an der Lagerplatte 35 befestigt ist, und an ihrem gegenüberliegenden Ende drehbar in einem Lager 40 an der Anschlussplatte 33. Die Spindelmutter 37 oder das Schiebelement 36 ist längs der Längsachse der Spindel 38 verschieblich geführt und entsprechend der bevorzugten Ausführungsform drehfest. Für die drehfeste Führung des Schiebelements 36 weist die Reinigungsvorrichtung eine Längsführung 41 auf, die in die Längsausnehmung 42 des Schiebelements 36 eingreift, wobei das Schiebelement 36 entlang der Längsführung 41 verschieblich ist. Die Spindel 38 weist als Drehantrieb 43 ein Handrad auf, mit dem die Spindel 38 gedreht werden kann, um die Spindelmutter 37 und mit ihr das Schiebelement 36 parallel zur Spindelachse über die Anschlussplatte 33 hinaus in den Produktkanal einer daran angeschlossenen Kühldüse zu bewegen. Die Anschlussplatte 33 weist als Zentrierelement 44 eine Bohrung auf, die zum Ausrichten der Reinigungsvorrichtung an einer Kühldüse verwendet werden kann.

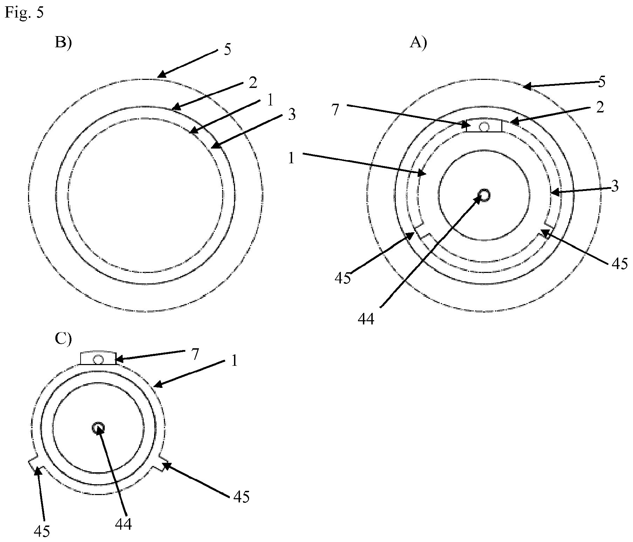

Die Figur 5A) zeigt eine Ausführungsform, bei der das Innenrohr 1 zusätzlich zum Träger 7 zwei Stege 45 aufweist, die mit dem Träger 7 im gleichen Winkel über den Umfang des Innenrohrs 1 angeordnet sind und den Produktkanal 3 in gleich große radiale Abschnitte unterteilen. Die Stege 45 überragen das Innenrohr 1 bis angrenzend an das innere Mantelrohr 2. In Figur 5B) ist die Kühldüse ohne das Innenrohr 1 in Aufsicht entlang der Längsachse gezeigt, in Figur 5C) das aus der Kühldüse entnommene Innenrohr 1 in Aufsicht entlang der Längsachse. In der in Figur 5 gezeigten Ausführungsform unterteilen die Stege 45 den Produktkanal sowohl über seine vollständige Länge, als auch über seine radiale Höhe. Für einen einfachen Austausch des Innenrohrs 1 gegen ein weiteres Innenrohr 1, das einen anderen Außendurchmesser aufweist und bevorzugt einen Träger 7, der sich bis in denselben Radius von seiner Längsmittelachse erstreckt, wie der Träger eines anderen Innenrohrs 1, optional zumindest einen Steg 45, ist jedes Innenrohr 1 nur mittels seines Trägers 7 lösbar im inneren Mantelrohr 2 festgelegt, z.B. lösbar mit dem inneren Mantelrohr 2 und/oder mit dem äußeren Mantelrohr 5 verbindbar.

**Bezugszeichen:**

| | |
|---|---|
| 1 Innenrohr | 25 Flansch des Verbindungsstücks |
| 2 inneres Mantelrohr | 26 Klemme |
| 3 Produktkanal | 27 Kernstück |
| 4 innerer Kühlmittelkanal | 28 Mantelabschnitt |
| 5 äußeres Mantelrohr | 29 Produktkanal |
| 6 äußerer Kühlmittelkanal | 30 Öffnung |
| 7 Träger | 31 Ansatz |
| 8 Gewindebohrung | 32 Montageplatte |
| 9 Wandfläche | 33 Anschlussplatte |
| 10 Schraube | 34 Halterung |
| 11 Montagebohrung | 35 Lagerplatte |
| 12 Schraubdeckel | 36 Schiebelement |
| 13 Dichtung | 37 Spindelmutter |
| 14 erster Einlass | 38 Spindel |
| 15 erster Auslass | 39 Spindellager |
| 16 zweiter Einlass | 40 Lager |
| 17 zweiter Auslass | 41 Längsführung |
| 18 Bohrung | 42 Längsausnehmung |
| 20 Gewinde | 43 Drehantrieb |
| 21 Deckel | 44 Zentrierelement |
| 22 Deckel | 45 Steg |
| 23 Flansch | |
| 24 Längsachse | |

## Patentansprüche

1. Kühldüse zur Verwendung in der Herstellung von Lebensmitteln, bei der ein Innenrohr (1) und ein um dieses in einem Abstand angeordnetes inneres Mantelrohr (2) zwischen sich einen Produktkanal (3) begrenzen, wobei das Innenvolumen des Innenrohrs (1) einen inneren Kühlmittelkanal (4) bildet und ein in einem Abstand um das innere Mantelrohr (2) angeordnetes äußeres Mantelrohr (5) einen äußeren Kühlmittelkanal (6) bildet, der den Produktkanal (3) umfasst, **dadurch gekennzeichnet, dass** der Querschnitt des Produktkanals (3) durch einen Träger (7) geteilt wird, der sich parallel zur Längsachse (24) des Innenrohrs (1) über die gesamte Länge des Produktkanals (3) erstreckt und dessen Wandflächen unterbrechungsfrei sind und durchgehend am Innenrohr (1) und am inneren Mantelrohr (2) angrenzen.

2. Kühldüse nach Anspruch 1, **dadurch gekennzeichnet, dass** der Träger (7) einen über die Länge des Produktkanals (3) konstanten Querschnitt aufweist.

3. Kühldüse nach einem der voranstehenden Ansprüche, **dadurch gekennzeichnet, dass** der Träger (7) lösbar am inneren Mantelrohr (2) befestigt ist.

4. Kühldüse nach einem der voranstehenden Ansprüche, **dadurch gekennzeichnet, dass** der Träger (7) mittels Schrauben (10), die in im Träger (7) angeordnete Gewindebohrungen (8) eingreifen und am inneren Mantelrohr (2) anliegen, am inneren Mantelrohr (2) befestigt ist und dass im äußeren Mantelrohr (5) Montagebohrungen (11) angeordnet sind, die die Gewindebohrungen (8) überdecken und die von Verschlüssen (12) reversibel verschließbar sind.

5. Kühldüse nach einem der voranstehenden Ansprüche, **dadurch gekennzeichnet, dass** der äußere Kühlkanal (6) einen ersten Einlass (14) und einen ersten Auslass (15) aufweist, an denen eine erste Kühleinrichtung angeschlossen ist und der innere Kühlkanal (4) einen zweiten Einlass (16) und einen zweiten Auslass (17) aufweist, an denen eine zweite Kühleinrichtung angeschlossen ist, wobei die erste Kühleinrichtung und die zweite Kühleinrichtung unabhängig voneinander eingerichtet sind, einen Kühlmittelstrom zu erzeugen, der für eine Kühlung der Masse mit einer Kühlrate von 5 bis 130 °C/min ausreicht.

6. Kühldüse nach einem der voranstehenden Ansprüche, **dadurch gekennzeichnet, dass** der Träger (7) an gegenüberliegenden Enden Bohrungen (18) aufweist, die einen zweiten Einlass (16) und einen zweiten Auslass (17) für den inneren Kühlmittelkanal (4) bilden, wobei die Bohrungen (18) durch das innere Mantelrohr (2) und das Innenrohr (1) geführt sind und an den Bohrungen (18) Anschlussleitungen angeschlossen sind, die dicht durch Bohrungen im äußeren Mantelrohr (5) geführt sind.

7. Kühldüse nach einem der voranstehenden Ansprüche, **dadurch gekennzeichnet, dass** sie unmittelbar am Auslass eines Extruders anschließbar ist.

8. Kühldüse nach einem der Ansprüche 1 bis 6, **dadurch gekennzeichnet, dass** sie mittels eines Verbindungsstücks mit dem Auslass eines Extruders verbindbar ist, das einen zumindest abschnittsweise ringförmigen Produktführungskanal zwischen einer Innenwand und einer davon beabstandeten Außenwand bildet und die Innenwand und/oder die Außenwand auf eine Temperatur beheizt ist, die höher als die Austrittstemperatur der Masse aus dem Extruder ist.

9. Kühldüse nach einem der Ansprüche 1 bis 7, **dadurch gekennzeichnet, dass** sie an einem Ende lösbar mit einem Verbindungsstück verbindbar ist, das in einem Mantelabschnitt (28) ein Kernstück (27) aufweist, die in einem radialen Abschnitt zwischen sich einen Produktführungskanal (29) bilden und die durch einen Ansatz (31) verbunden sind, wobei der Querschnitt des Produktführungskanals (29) passend zum Querschnitt des Produktkanals (3) angeordnet ist.

10. Kühldüse nach Anspruch 9, **dadurch gekennzeichnet, dass** das Kernstück (27) einstückig mit dem Ansatz (31) und daran dem Mantelabschnitt (28) ausgebildet ist.

11. Kühldüse nach einem der voranstehenden Ansprüche, **dadurch gekennzeichnet, dass** sie so ausgerichtet ist, dass der Träger (7) oberhalb der Längsachse (24) des Innenrohrs (1) und/oder des inneren Mantelrohrs (2) angeordnet ist und der Austritt des Produktkanals (3) oberhalb eines Förderbands angeordnet ist.

12. Kühldüse nach einem der voranstehenden Ansprüche, **gekennzeichnet durch** zumindest einen Steg (45), der sich über die Länge des Innenrohrs (1) parallel zu dessen Längsachse (24) erstreckt und über das Innenrohr (1) ragt, wobei das Innenrohr (1) ausschließlich mittels des Trägers (7) mit dem inneren Mantelrohr (2) und/oder dem äußeren Mantelrohr (5) fest verbunden ist.

13. Kühldüse nach Anspruch 12, **gekennzeichnet durch** zumindest zwei Stege (45), die jeweils im gleichen Abstand zueinander und zum Träger (7) um den Umfang des Innenrohrs (1) angeordnet sind.

14. Kühldüse nach einem der Ansprüche 12 bis 13, **dadurch gekennzeichnet, dass** der Steg (45) sich bis in einen Abstand von maximal 2 mm vom inneren Mantelrohr (2) erstreckt.

15. Kühldüse nach einem der voranstehenden Ansprüche, **gekennzeichnet durch** eine Kombination mit zumindest einem weiteren Innenrohr (1), das gegen das eine Innenrohr (1) austauschbar ist, wobei das weitere Innenrohr (1) einen anderen Außendurchmesser aufweist und einen Träger (7), wobei sich die Träger (7) bis in denselben Radius von der Längsmittelachse des Innenrohrs (1) erstrecken.

16. Reinigungsvorrichtung zur Verwendung mit einer Kühldüse nach einem der voranstehenden Ansprüche mit einer Anschlussplatte (33) zum Anbringen an der Kühldüse, einer mittels einer Halterung (34) mit der Anschlussplatte (33) verbundenen Lagerplatte (35), an denen eine Spindel (38) ortsfest und drehbar gelagert ist, einer Spindelmutter (37), die mit der Spindel (38) in Eingriff steht und mit einem längs der Spindel (38) verschieblichen Schiebelement (36) verbunden ist, das einen Querschnitt aufweist, der etwa gleich dem oder kleiner als der Querschnitt des Produktkanals (3) ist und eine Längsausnehmung (42) aufweist, die einen Querschnitt etwa gleich dem oder größer als der Querschnitt des Trägers (7) aufweist.

17. Verfahren zur Herstellung von Lebensmitteln durch Extrudieren einer proteinhaltigen Masse und anschließendem Kühlen der extrudierten Masse mittels einer Kühldüse, **dadurch gekennzeichnet, dass** die extrudierte Masse durch den Produktkanal (3) einer Kühldüse nach einem der Ansprüche 1 bis 15 bewegt wird, Kühlmittel durch den inneren Kühlmittelkanal (4) und den äußeren Kühlmittelkanal (6) bewegt wird und die Masse nach Austreten aus dem Produktkanal (3) auf ein Förderband gelegt wird, um eine einschichtige und kontinuierliche Schicht zu bilden.

18. Verfahren nach Anspruch 17, **dadurch gekennzeichnet, dass** die Masse nach Austreten aus dem Produktkanal (3) nicht längs ihrer Bewegungsrichtung geteilt wird.

19. Verfahren nach einem der Ansprüche 17 bis 18, **dadurch gekennzeichnet, dass** die Masse vor dem Kühlen durch ein zwischen dem Austritt des Extruders und dem Eintritt des Produktkanals (3) durch ein Verbindungsstück geführt wird, das einen zumindest abschnittsweise ringförmigen Produktführungskanal zwischen einer Innenwand und einer davon beabstandeten Außenwand bildet und die Innenwand und/oder die Außenwand auf eine Temperatur beheizt ist, die höher als die Austrittstemperatur der Masse aus dem Extruder ist.

20. Verfahren nach einem der Ansprüche 17 bis 19, **dadurch gekennzeichnet, dass** die Kühldüse um zumindest einen axialen Abschnitt verlängert oder verkürzt wird, um die Struktur des Produkts zu verändern und/oder bei Extrudieren einer anderen Masse bzw. nach einem Produktwechsel.

21. Verfahren nach einem der Ansprüche 17 bis 20, **dadurch gekennzeichnet, dass** nach Beenden oder Unterbrechen des Verfahrens die Masse dadurch aus dem Produktkanal (3) bewegt wird, dass ein Schiebelement (36), das mit einer Spindelmutter (37) verbunden ist, mittels einer Spindel (38) in den Produktkanal (3) bewegt wird, wobei die Spindel (38) drehbar und ortsfest an einer Lagerplatte (35) gelagert ist, die mittels einer Halterung (34) mit einer mit der Kühldüse verbundenen Anschlussplatte (33) verbunden ist.

22. Verfahren nach einem der Ansprüche 17 bis 21, **dadurch gekennzeichnet, dass** das Verfahren unterbrochen wird und das Innenrohr (1) einschließlich seines Trägers (7) aus dem inneren Mantelrohr (2) entfernt wird und ein weiteres Innenrohr (1) in das innere Mantelrohr (2) eingeführt und darin mittels seines Trägers (7) befestigt wird, , wobei das weitere Innenrohr (1) einen anderen Außendurchmesser aufweist und einen Träger (7), wobei sich die Träger (7) bis in denselben Radius von der Längsmittelachse des Innenrohrs (1) erstrecken.

## Claims

1. Cooling nozzle for use in the production of foods, in which an inner tube (1) and, arranged at a distance around it, an inner jacket tube (2) between them confine a product channel (3), wherein the inner volume of the inner tube (1) forms an inner coolant channel (4) and wherein an outer jacket tube (5) that is arranged at a distance around the inner jacket tube (2) forms an outer coolant channel (6) that encompasses the product channel (3), **characterized in that** the cross-section of the product channel (3) is divided by a carrier (7) that extends in parallel to the longitudinal axis (24) of the inner tube (1) over the entire length of the product channel (3) and the wall surfaces of which carrier (7) are seamless and continuously abut on the inner tube (1) and on the inner jacket tube (2).

2. Cooling nozzle according to claim 1, **characterized in that** the carrier (7) has a cross-section that is constant along the length of the product channel (3).

3. Cooling nozzle according to one of the preceding claims, **characterized in that** the carrier (7) is releasably connected to the inner jacket tube (2).

4. Cooling nozzle according to one of the preceding claims, **characterized in that** the carrier (7) is connected to the inner jacket tube (2) by screws (10) that engage in threaded bore holes (8) arranged within the carrier (7) and that abut on the inner jacket tube (2), and **in that** in the outer jacket tube (5) mounting bore holes are arranged that cover the threaded bore holes (8) and that are reversibly closable by closures (12).

5. Cooling nozzle according to one of the preceding claims, **characterized in that** the outer cooling channel (6) has a first inlet (14) and a first outlet (15) to which a first cooling device is connected, and **in that** the inner cooling channel (4) has a second inlet (16) and a second outlet (17) to which a second cooling device is connected, wherein the first cooling device and the second cooling device independently from one another are configured to generate a coolant flow that is sufficient for cooling the mass at a cooling rate of from 5 to 130 °C/min.

6. Cooling nozzle according to one of the preceding claims, **characterized in that** the carrier (7) on its opposite ends has bore holes (18) that form a second inlet (16) and a second outlet (17) for the inner coolant channel (4), wherein the bore holes (18) are guided through the inner jacket tube (2) and the inner tube (1) and wherein connection lines that are sealingly guided through bore holes within the outer jacket tube (5) are connected to the bore holes (18).

7. Cooling nozzle according to one of the preceding claims, **characterized in that** it is directly connectable to the outlet of an extruder.

8. Cooling nozzle according to one of claims 1 to 6, **characterized in that** it is connectable to the outlet of an extruder by a connecting piece that forms an at least sectionally annular product guiding channel between an inner wall and an outer wall spaced therefrom, and **in that** the inner wall and/or the outer wall is heated to a temperature that is higher than the outlet temperature of the mass from the extruder.

9. Cooling nozzle according to one of claims 1 to 7, **characterized in that** at one end it is releasably connectable to a connecting piece having a core piece (27) within a jacket section (28), which between them within a radial section form a product guiding channel (29) and which are connected by a catch (31), wherein the cross-section of the product guiding channel (29) is arranged matching the cross-section of the product channel (3).

10. Cooling nozzle according to claim 9, **characterized in that** the core piece (27) is formed with the catch (31) and the jacket section (28) thereon as a single piece.

11. Cooling nozzle according to one of the preceding claims, **characterized in that** it is oriented in a way that the carrier (7) is arranged above the longitudinal axis (24) of the inner tube (1) and/or of the inner jacket tube (2), and **in that** the outlet of the product channel (3) is arranged above a conveyor belt.

12. Cooling nozzle according to one of the preceding claims, **characterized by** at least one web (45) that extends over the length of the inner tube (1) and in parallel to its longitudinal axis (24) and that protrudes over the inner tube (1), wherein the inner tube (1) is fixedly connected to the inner jacket tube (2) and/or the outer jacket tube (5) exclusively by means of the carrier (7).

13. Cooling nozzle according to claim 12, **characterized by** at least two webs (45) that are arranged around the circumference of the inner tube (1), each in equal distance to one another and to the carrier (7).

14. Cooling nozzle according to one of claims 12 to 13, **characterized in that** the web (45) extends up to a distance of at maximum 2 mm from the inner jacket tube (2).

15. Cooling nozzle according to one of the preceding claims, **characterized by** being combined with at least one further inner tube (1) that is exchangeable against the one inner tube (1), wherein the further inner tube (1) has a different outer diameter and a carrier (7), wherein the carriers (7) extend up to the same radius from the longitudinal central axis of the inner tube (1).

16. Cleaning device for use with a cooling nozzle according to one of the preceding claims, having a connector plate (33) for mounting to the cooling nozzle, having a bearing plate (35) which is connected to the connector plate (33) by means of a holder (34) and at which a spindle (38) is run on bearings stationary and rotatably and a spindle nut (37) that engages the spindle (38) and that is connected to a pushing element (36) that is slidable lengthwise along the spindle (38) and that has a cross-section approximately equal to or smaller than the cross-section of the product channel (3) and that has a longitudinal recess (42) having a cross-section approximately equal to or larger than the cross-section of the carrier (7).

17. Process for the production of foods by extruding a protein containing mass and subsequently cooling the extruded mass by means of a cooling nozzle, **characterized in that** the extruded mass is moved through the product channel (3) of a cooling nozzle according to one of claims 1 to 15, coolant is moved through the inner coolant channel (4) and through the outer coolant channel (6), and after exiting the product channel (3) the mass is laid onto a conveyor belt in order to form a single-layered and continuous layer.

18. Process according to claim 17, **characterized in that** after exiting the product channel (3) the mass is not divided lengthwise to its direction of movement.

19. Process according to one of claims 17 to 18, **characterized in that** prior to cooling, the mass is guided through a connecting piece arranged between the outlet of the extruder and the inlet of the product channel (3), which connecting piece forms an at least sectionally annular product guiding channel between an inner wall and an outer wall spaced-apart therefrom, and **in that** the inner wall and/or the outer wall is heated to a temperature that is higher than the outlet temperature of the mass from the extruder.

20. Process according to one of claims 17 to 19, **characterized in that** the cooling nozzle is lengthened or shortened by at least one axial section in order to change the structure of the product and/or when extruding a different mass or respectively after a change of product.

21. Process according to one of claims 17 to 20, **characterized in that** after finishing or interrupting the process, the mass is moved out of the product channel (3) by moving a pushing element (36) that is connected to a spindle nut (37) into the product channel (3) by means of a spindle (38), wherein the spindle (38) is run on bearings rotatably and stationary at a bearing plate (35) that by means of a holder (34) is connected to a connector plate (33) that is connected to the cooling nozzle.

22. Process according to one of claims 17 to 21, **characterized in that** the process is interrupted and the inner tube (1) including its carrier (7) is removed from the inner jacket tube (2) and a further inner tube (1) is inserted into the inner jacket tube (2) and is attached therein by means of its carrier (7), wherein the further inner tube (1) has a different outer diameter and a carrier (7), wherein the carriers (7) extend into the same radius from the longitudinal central axis of the inner tube (1).

## Revendications

1. Buse de refroidissement pour l'utilisation dans la production d'aliments, dans laquelle un tube intérieur (1) et un tube-fourreau intérieur (2) disposé à une distance autour du dernier limitent entre eux un canal à produit (3), le volume intérieur du tube intérieur (1) formant un canal à frigorigène intérieur (4) et un tube-fourreau extérieur (5) disposé à une distance autour du tube-fourreau intérieur (2) formant un canal à frigorigène extérieur (6) qui renferme le canal à produit (3), **caractérisée en ce que** la section transversale du canal à produit (3) est divisé par un support (7) qui s'étend parallèlement à l'axe longitudinal (24) du tube intérieur (1) sur la longueur entière du canal à produit (3) et les surfaces de paroi duquel sont ininterrompues et continuellement contiguës au tube intérieur (1) et au tube-fourreau intérieur (2).

2. La buse de refroidissement selon la revendication 1, **caractérisée en ce que** le support (7) présente une section transversale constante sur la longueur du canal à produit (3).

3. La buse de refroidissement selon l'une des revendications précédentes, **caractérisée en ce que** le support (7) est fixé de manière détachable au tube-fourreau intérieur (2).

4. La buse de refroidissement selon l'une des revendications précédentes, **caractérisée en ce que** le support (7) est fixé au tube-fourreau intérieur (2) au moyen de vis (10) qui s'engagent dans des alésages filetés (8) disposés dans le support (7) et qui sont contiguës au tube-fourreau intérieur (2), et **en ce que** des alésages de montage (11) sont disposés dans le tube-fourreau extérieur (5), qui recouvrent les alésages filetés (8) et qui peuvent être fermés par des fermetures (12) de manière réversible.

5. La buse de refroidissement selon l'une des revendications précédentes, **caractérisée en ce que** le canal de refroidissement extérieur (6) présente une première entrée (14) et une première sortie (15) auxquelles un premier dispositif de refroidissement est raccordé et le canal de refroidissement intérieur (4) présente une deuxième entrée (16) et une deuxième sortie (17) auxquelles un deuxième dispositif de refroidissement est raccordé, le premier dispositif de refroidissement et le deuxième dispositif de refroidissement étant configurés de manière indépendante l'un de l'autre à générer un écoulement de frigorigène qui est suffisant pour un refroidissement de la masse d'un taux de refroidissement de 5 à 130 °C/min.

6. La buse de refroidissement selon l'une des revendications précédentes, **caractérisée en ce que** le support (7) présente des perçages (18) aux extrémités opposées, qui forment une deuxième entrée (16) et une deuxième sortie (17) pour le canal à frigorigène intérieur (4), les perçages (18) étant guidés à travers le tube-fourreau intérieur (2) et le tube intérieur (1) et des lignes de raccordement étant raccordées aux perçages (18), les lignes de raccordement étant guidées de manière étanche à travers des perçages dans le tube-fourreau extérieur (5).

7. La buse de refroidissement selon l'une des revendications précédentes, **caractérisée en ce qu'**elle peut être raccordée directement à la sortie d'une extrudeuse.

8. La buse de refroidissement selon l'une des revendications 1 à 6, **caractérisée en ce qu'**elle peut être reliée à la sortie d'une extrudeuse au moyen d'un élément de raccordement qui forme un canal de guidage de produit, lequel est annulaire au moins par sections, entre une paroi intérieure et une paroi extérieure à une distance de la dernière, et la paroi intérieure et/ou la paroi extérieure est chauffée à une température qui est plus élevée que la température de sortie de la masse sortant de l'extrudeuse.

9. La buse de refroidissement selon l'une des revendications 1 à 7, **caractérisée en ce qu'**elle peut être reliée de manière détachable à une extrémité par un élément de raccordement qui présente un élément central (27) dans une section de fourreau (28), qui forment entre eux dans une section radiale un canal de guidage de produit (29) et qui sont reliés par un épaulement (31), la section transversale du canal de guidage de produit (29) étant disposée de manière alignée avec la section transversale du canal à produit (3).

10. La buse de refroidissement selon la revendication 9, **caractérisée en ce que** l'élément central (27) est configuré d'une seule pièce avec l'épaulement (31) ainsi que la section de fourreau (28) sur ce dernier.

11. La buse de refroidissement selon l'une des revendications précédentes, **caractérisée en ce qu'**elle est orientée de façon à ce que le support (7) soit disposé au-dessus de l'axe longitudinal (24) du tube intérieur (1) et/ou du tube-fourreau intérieur (2) et la sortie du canal à produit (3) soit disposée au-dessus d'une bande transporteuse.

12. La buse de refroidissement selon l'une des revendications précédentes, **caractérisée par** au moins une crête (45) qui s'étend sur la longueur du tube intérieur (1) parallèlement à l'axe longitudinal (24) de ce dernier et qui surmonte le tube intérieur (1), le tube intérieur (1) étant relié de manière fixe uniquement au moyen du support (7) au tube-fourreau intérieur (2) et/ou au tube-fourreau extérieur (5).

13. La buse de refroidissement selon la revendication 12, **caractérisée par** au moins deux crêtes (45) qui sont respectivement disposées à la même distance l'une par rapport à l'autre et par rapport au support (7) autour de la circonférence du tube intérieur (1).

14. La buse de refroidissement selon l'une des revendications 12 à 13, **caractérisée en ce que** la crête (45) s'étend jusqu'à une distance maximum de 2 mm du tube-fourreau intérieur (2).

15. La buse de refroidissement selon l'une des revendications précédentes, **caractérisée par** une combinaison avec au moins un autre tube intérieur (1) qui est échangeable contre le premier tube intérieur (1), l'autre tube intérieur (1) présentant un autre diamètre extérieur et un support (7), les supports (7) s'étendant jusque dans le même rayon de l'axe central longitudinal du tube intérieur (1).

16. Dispositif de nettoyage pour l'utilisation avec une buse de refroidissement selon l'une des revendications précédentes avec une plaque de raccordement (33) à être montée sur la buse de refroidissement, une plaque de palier (35) reliée à la plaque de raccordement (33) au moyen d'un dispositif de fixation (34), sur quelles plaques un arbre (38) est aménagé de manière fixe et rotative, un écrou d'arbre (37) engagé avec l'arbre (38) et relié à un élément coulissant (36) déplaçable le long de l'arbre (38), l'élément coulissant (36) présentant une section transversale qui est approximativement égale ou plus petite que la section transversale du canal à produit (3) et qui présente une cavité longitudinale (42) ayant une section transversale approximativement égale ou plus grande que la section transversale du support (7).

17. Procédé de production d'aliments par l'extrusion d'une masse contenant de la protéine et un refroidissement ultérieur de la masse extrudée au moyen d'une buse de refroidissement, **caractérisé en ce que** la masse extrudée est déplacée à travers un canal à produit (3) d'une buse de refroidissement selon l'une des revendications 1 à 15, du frigorigène est déplacé à travers le canal à frigorigène intérieur (4) et le canal à frigorigène extérieur (6), et la masse, après être sortie du canal à produit (3), est mise sur une bande transporteuse pour former une couche monocouche et continue.

18. Le procédé selon la revendication 17, **caractérisé en ce que** la masse, après être sortie du canal à produit (3), n'est pas découpée dans le sens longitudinal de sa direction de mouvement.

19. Le procédé selon l'une des revendications 17 à 18, **caractérisé en ce que** la masse est guidée avant le refroidissement à travers un élément de raccordement entre la sortie de la extrudeuse et l'entrée du canal à produit (3), l'élément de raccordement formant un canal de guidage de produit, lequel est annulaire au moins par sections, entre une paroi intérieure et une paroi extérieure à une distance de la dernière, et la paroi intérieure et/ou la paroi extérieure étant chauffée à une température qui est plus élevée que la température de sortie de la masse sortant de l'extrudeuse.

20. Le procédé selon l'une des revendications 17 à 19, **caractérisé en ce que** la buse de refroidissement est rallongée ou raccourcie d'au moins une section axiale pour modifier la structure du produit et/ou pendant l'extrusion d'une autre masse ou après un changement de produit.

21. Le procédé selon l'une des revendications 17 à 20, **caractérisé en ce que**, après l'achèvement ou l'interruption du procédé, la masse est déplacée hors du canal à produit (3) en déplaçant un élément coulissant (36), qui est relié à un écrou d'arbre (37), dans le canal à produit (3) au moyen d'un arbre (38), l'arbre (38) étant aménagé de manière rotative et fixe sur une plaque de palier (35) laquelle est reliée au moyen d'un dispositif de fixation (34) à une plaque de raccordement (33) reliée à la buse de refroidissement.

22. Le procédé selon l'une des revendications 17 à 21, **caractérisé en ce que** le procédé est interrompu et le tube intérieur (1), y compris son support (7), est enlevé du tube-fourreau intérieur (2) et un autre tube intérieur (1) est introduit dans le tube-fourreau intérieur (2) et y est fixé au moyen de son support (7), l'autre tube intérieur (1) présentant un autre diamètre extérieur et un support (7), les supports (7) s'étendant jusque dans le même rayon de l'axe central longitudinal du tube intérieur (1).
